# EUROPÄISCHE PATENTANMELDUNG

(11) **EP 1 891 860 A1**
(43) Veröffentlichungstag der Anmeldung: **27.02.2008**
(21) Anmeldenummer: 07016065.0
(22) Anmeldetag: 16.08.2007
(51) Int. Cl.: A22C 15/00

(54) **Anordnung aus Verschliess- und Fangvorrichtung für wurstförmige Verpackungen**

(30) Priorität: 22.08.2006 CH 13342006
(71) Anmelder: Tipper Tie Alpina AG, 9201 Gossau (CH)
(72) Erfinder: Lendenmann, Max, 9500 Wil (CH)
(74) Vertreter: Schalch, Rainer

(57) **Zusammenfassung**

Bei einer Anordnung aus Verschliessvorrichtung (1) für Würste und einer Fangvorrichtung (11) für an den Würsten befestigten Halteschlaufen (24) ist an der Fangvorrichtung ein Schwert (30) vorgesehen, auf das die Halteschlaufen aufgezogen werden. Der vordere Schwerdenteil (10) ist dabei so angeordnet, dass die jeweils an der Wurst befestigte Halteschlaufe direkt durch das Verschliesswerkzeug der Verschliessvorrichtung (1) auf das freie Ende des Schwertendteils aufgezogen wird. Dadurch ergibt sich eine Vereinfachung der Anordnung und der Fangvorrichtung.

## Beschreibung

Die Erfindung betrifft eine Anordnung umfassend eine Verschliessvorrichtung zur Bildung von wurstförmigen, beidseits mit Clipsen verschlossenen Verpackungseinheiten, mit einem Halteschlaufenzubringer, welcher dem Verschliesswerkzeug Halteschlaufen zu deren Anbringung an einem Verpackungseinheitsende mittels des dort gesetzten Clips zuführt, sowie umfassend eine Fangvorrichtung mit einem Schwert, auf dessen der Verschliessvorrichtung zugewandten Schwertendteil die Halteschlaufen zum Aufhängen der Verpackungseinheiten am Schwert aufziehbar sind, und ein angetriebenes Fördermittel für die aus der Verschliessvorrichtung austretenden Verpackungseinheiten. Weiter betrifft die Erfindung eine Fangvorrichtung für eine derartige Anordnung sowie ein Verfahren zum Aufbringen von Halteschlaufen auf ein Schwert.

DE-OS 3437830 erwähnt das manuelle oder maschinelle Aufschieben von mit Halteschlaufen versehenen Würsten auf ein Schwert. Von dem Schwert aus werden die Würste weitergefördert und an einen Rauchstecken abgegeben. Aus DE-PS 3806467 ist eine Fangvorrichtung für die Halteschlaufen von Würsten bekannt, die an eine Befüll- bzw. Verschliessvorrichtung für die Würste anschliesst. Dabei ist ein Schwert mit einem freien Ende sowie ein angetrieben beweglicher Indexstift vorgesehen, der das freie Ende verschliessen kann. Beim Befestigen der Halteschlaufe an der Wurst mittels des diese verschliessenden Clips trifft diese Vorrichtung in Funktion und der Indexstift nimmt als Einfangvorrichtung die Halteschlaufe auf und wird zur Anlage an die Schwertspitze geführt. Eine die Würste abstützende Klappe schwenkt danach nach unten und das Eigengewicht der nach unten fallenden Würste zieht die Halteschlaufe auf die Schwertspitze auf. EP-A-1498034 zeigt eine Fangvorrichtung mit Indexstift ähnlich derjenigen von DE-PS 3806467, wobei zusätzlich ein Förderband für die Wurst vorgesehen ist, durch dessen Förderbewegung die Schlaufe auf das Schwert bzw. den Dorn aufgezogen wird, wonach die Wurst von einer Förderwelle weitergefördert wird.

Verschliessvorrichtungen, sogenannte Clipmaschinen, sind bekannt, z.B. aus DE-A-40 13 033. Solche Vorrichtungen weisen ein Verdrängerscherenpaar auf. Die Verdrängerscheren schnüren die in offener Scherenposition in die Scheren eingeführte schlauchförmige Verpackung durch Schliessen der Scheren ein, wobei die beiden Scheren nebeneinander liegen (Raffvorgang). Nach der Einschnürung, bzw. dem Raffen, wird die eine Schere zur anderen, feststehenden Schere seitlich, bzw. in Längsrichtung der Verpackung versetzt, wodurch das in der Verpackung enthaltene Produkt aus dem zwischen den Scheren liegenden Bereich verdrängt wird und somit ein produktfreier Bereich (Zopf) zwischen zwei nun gebildeten wurstförmigen Verpackungseinheiten bzw. Würsten geschaffen wird, in den nachfolgend durch ein Verschliesswerkzeug der oder die Verschlussclips gesetzt wird bzw. werden. Dabei kann auch der Zopf zwischen den Würsten durchtrennt werden, um einzelne Würste zu bilden. In der Regel werden zwei Clips gesetzt, nämlich der zweite Clip für die vorlaufende Wurst und der erste Clip für die nachfolgende Wurst. Beim Setzen des zweiten Clips wird an der Wurst oder an der letzten einer zusammenhängenden Reihe von Würsten eine Halteschlaufe mittels des Clips befestigt, wenn dies gewünscht ist. Mit der Halteschlaufe kann die Wurst oder die Reihe von Würsten an einen Rauchstecken aufgehängt werden.

Der Erfindung liegt die Aufgabe zu Grunde, das Aufbringen von mit Halteschlaufen versehenen Verpackungseinheiten auf ein Schwert zu vereinfachen.

Diese Aufgabe wird bei der eingangs genannten Anordnung dadurch gelöst, dass das Schwertendteil sich von einer Lage seitlich des Fördermittels zum Schlaufenzubringer erstreckt und dort ein freies Ende derart positioniert aufweist, dass eine vom Verschliesswerkzeug mitgenommene Halteschlaufe durch diese Mitnahme über das freie Schwertende gezogen und damit auf das Schwertendteil aufgenommen wird.

Ferner wird die Aufgabe durch eine Fangvorrichtung nach Anspruch 11 sowie durch das Verfahren gemäss Anspruch 22 gelöst.

Dadurch, dass die Halteschlaufe direkt mittels des Verschliesswerkzeuges auf das freie Ende des Schwertes aufziehbar ist, ergibt sich eine deutliche Vereinfachung; es wird kein angetriebener beweglicher Indexstift oder Fänger benötigt, wie nach Stand der Technik. Durch die Erstreckung des Schwertendteiles von einer Lage seitlich des Fördermittels auf den Schlaufenzubringer zu kann die Aufnahme der Halteschlaufe mit der Werkzeugbewegung erfolgen.

Bei einer bevorzugten Ausführungsform ist das Schwertendteil gekrümmt oder mehrfach abgewinkelt, insbesondere wendelartig gebogen, um von der Lage seitlich des Fördermittels mit seinem freien Ende zum Schlaufenzubringer zu gelangen. Dabei kann das freie Schwertendteil unter die Förderebene des Fördermittels oder im Wesentlichen in diese Ebene oder über die Ebene des Fördermittels zu liegen kommen. Bei einer bevorzugten Ausführungsform erstreckt sich das Endteil des Schwertes zum Schwert hin von seiner Lage seitlich des Fördermittels nach oben über das Fördermittel, dies ebenfalls gekrümmt oder abgewinkelt und insbesondere wendelartig gebogen.

Im Folgenden werden Ausführungsbeispiele der Erfindung an Hand der Figuren näher erläutert. Dabei zeigt
Figur 1 eine Ansicht einer Anordnung aus Verschliessvorrichtung, Fangvorrichtung und Fördermittel, wobei nur ein Teil der Fangvorrichtung ersichtlich ist;
Figur 2 eine Ansicht wie diejenige von Figur 1, wobei der restliche Teil der Fangvorrichtung und ein Teil einer nicht zur Erfindung gehörigen Übergabevorrichtung dargestellt ist;
Figur 3 die Darstellung des Details A von Figur 1 mit einer ersten Stellung des Verschliesswerkzeuges;
Figur 4 die Darstellung des Details A von Figur 1 mit einer zweiten Stellung des Verschliesswerkzeuges;
Figur 5 die Ansicht des Schnittes D-D von Figur 1; und
Figur 6 die Ansicht auf das Schwert der Fangvorrichtung in Richtung X der Figuren 1 und 2.

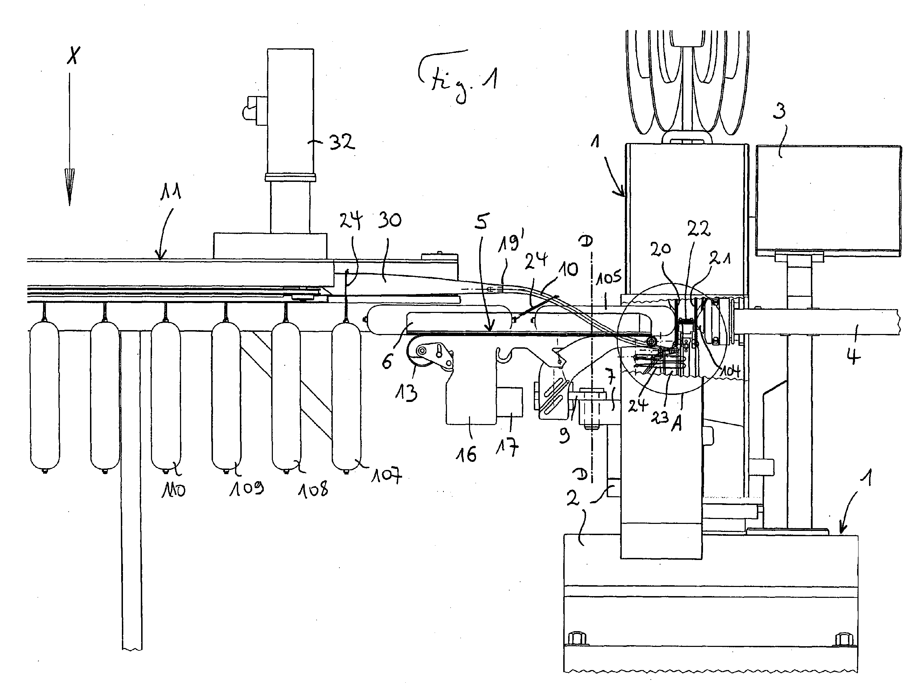

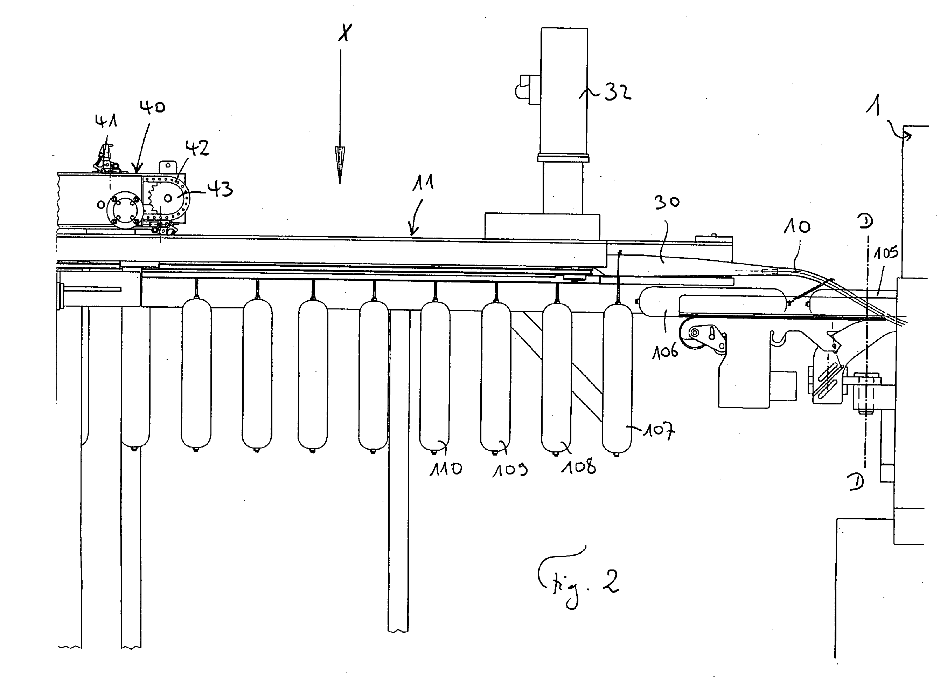

Figur 1 und Figur 2 zeigen zusammen eine Frontalansicht einer Anordnung mit einer Verschliessvorrichtung 1 und einer Fangvorrichtung 11. In der Verschliessvorrichtung werden auf die eingangs erläuterte bekannte Weise, auf die hier verwiesen wird, wurstförmige Verpackungseinheiten gebildet, indem eine schlauchförmige Verpackung mittels Scherenpaaren gerafft und das Füllgut verdrängt wird und somit ein füllgutfreier Bereich (Zopf) zwischen zwei Verpackungseinheiten geschaffen wird, worauf mittels Verschlussclipsen Anfang und Ende der wurstförmigen Verpackungseinheiten verschlossen werden. Die Verschliessvorrichtung 1 weist ein Maschinengestell 2 und Gehäuseteile auf. An dem Maschinengestell sind auf bekannte Weise Antriebsmittel für den Antrieb der erwähnten Scherenpaare und die Verschliesswerkzeuge vorgesehen sowie für weitere Elemente der Vorrichtung, insbesondere für einen Zubringer für die Halteschlaufen. Dies ist dem Fachmann bekannt und wird hier nicht weiter erläutert. Eine Steuerungs- und Bedienungseinheit 3 ist für den Betrieb der Vorrichtung vorgesehen. Auf bekannte Weise erfolgt die Zuführung des zu verpackenden, in der Regel pastösen, Gutes über ein nur teilweise dargestelltes Füllrohr 4, auf welchem die nicht dargestellte schlauchförmige Verpackungshülle aufgezogen ist. Diese tritt durch eine sogenannte Darmbremse hindurch und wird am freien Füllrohrende in der Verschliessvorrichtung mit dem Gut befüllt, was in der Figur 1 mit dem aus der Darmbremse austretenden einen Ende der Verpackungseinheit bzw. Wurst 104 dargestellt ist. Die Scherenpaare 20 und 21 bilden auf die erläuterte Weise den eingeschnürten Verpackungsbereich 22, in welchem kein Verpackungsgut enthalten ist und an welchem mit dem noch genauer beschriebenen Werkzeug die Verschlussclips gesetzt werden. Dabei wird auch der Bereich 22 zwischen den Verschlussclips durchtrennt, so dass einzelne Würste entstehen. Unterbleibt dies zwischen zwei oder mehreren Würsten, so entsteht eine Kette aus zwei oder mehreren Würsten. Mit dem Endclip der einen Wurst oder der letzten Wurst einer Kette wird an dieser eine der Halteschlaufen 24 befestigt, was noch näher erläutert wird. Die Würste werden auf einem Fördermittel 5 aus der Verschliessvorrichtung 1 wegtransportiert. Dabei wird die jeweilige Halteschlaufe 24 auf den Schwertendteil 10 eines Schwertes 30 der Fangvorrichtung 11 aufgezogen, wodurch die das Fördermittel verlassenden Würste mittels der Halteschlaufen 24 am Schwert hängend aufgereiht werden und mittels einer Transporteinrichtung entlang diesem transportiert werden, was mittels der Würste 107-110 dargestellt ist. Am anderen Ende der Fangvorrichtung 11 werden die Würste von einer Übernahmevorrichtung 40 vom Schwert 30 übernommen und an einen Rauchstab abgegeben, was indes nicht Gegenstand der vorliegenden Erfindung ist und daher im Folgenden mit Ausnahme der Erfassung der auf dem Schwert 30 transportierten Würste durch die Übergabevorrichtung 40 nicht weiter erläutert wird.

Anhand der Figuren 1 sowie 3-5 wird nun das Aufnehmen der Halteschlaufen 24 der wurstförmigen Verpackungseinheiten auf das Schwert 30 und insbesondere den Schwertendteil 10, der an der Stelle 19' mit dem weiteren Teil des Schwertes verbunden ist, genauer beschrieben. Die von der Verschliessvorrichtung 1 verschlossenen Verpackungseinheiten mit der endseitig angebrachten Halteschlaufe werden von dem Fördermittel 5 aus der Verschliessvorrichtung 1 wegtransportiert, das im gezeigten Beispiel als Förderband mit einem Band 5' ausgestaltet, das hier zugleich die Förderebene 5' definiert. Das Fördermittel weist eine hintere Bandumlenkrolle 13 sowie einen entsprechenden Antrieb 17 und 16 für das Förderband auf, der hier nicht weiter erläutert wird. Das Fördermittel kann Teil der Verschliessvorrichtung 1 sein, kann aber auch Teil der Fangvorrichtung 11 sein oder kann eine Vorrichtung für sich alleine sein, welche sich zwischen Verschliessvorrichtung 1 und Fangvorrichtung 11 befindet. Jedenfalls ist aber das Fördermittel mit der Verschliessvorrichtung und der Fangvorrichtung antriebsmässig synchronisiert, sodass die Fördergeschwindigkeit auf die beiden anderen Vorrichtungen abgestimmt ist. Im gezeigten Beispiel ist das Fördermittel 5 an einem Ausleger 7 des Maschinengestells 2 mittels eines Armes 9 befestigt, sodass das Fördermittel Teil der Verschliessvorrichtung 1 ist. Entsprechend wird der Antrieb 16, 17 vorzugsweise von der Steuerung 3 gesteuert. Beidseits des Förderbandes 5' können Leitbleche 6 vorgesehen sein, welche mit dem Band 5' einen Förderkanal für die Würste bilden, wobei in der Darstellung von Figur 1 das in der Figur vordere Leitblech 6 durchsichtig dargestellt ist, sodass die Würste 105 und 106 trotz des Leitbleches erkennbar sind.

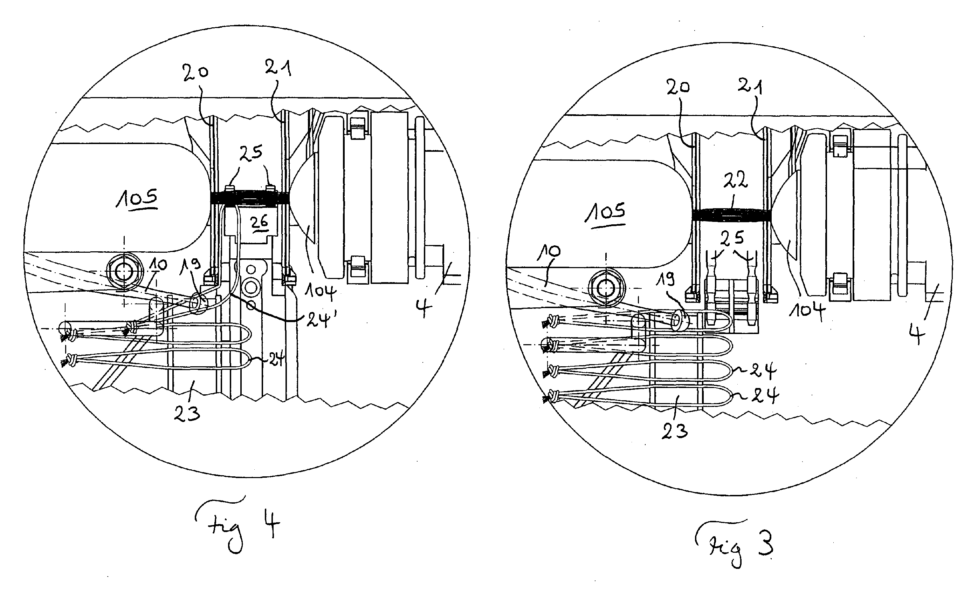

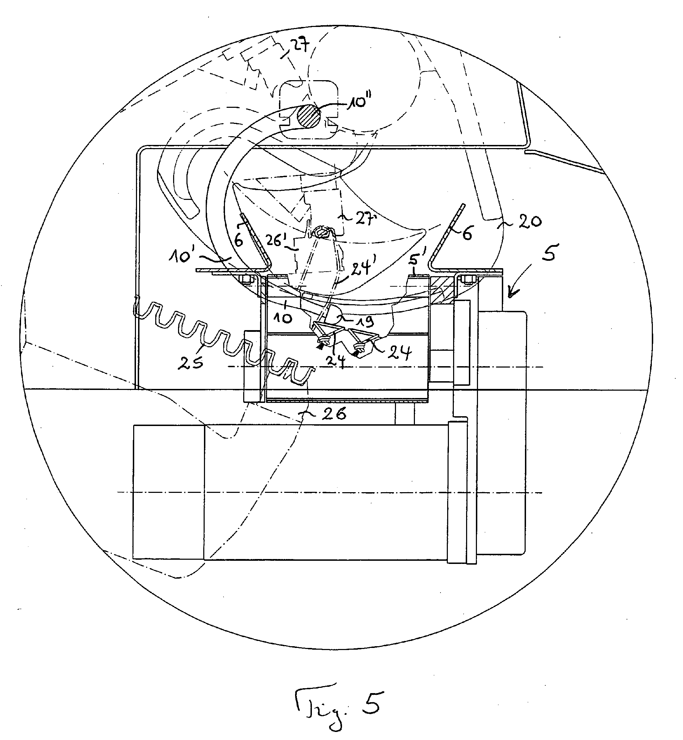

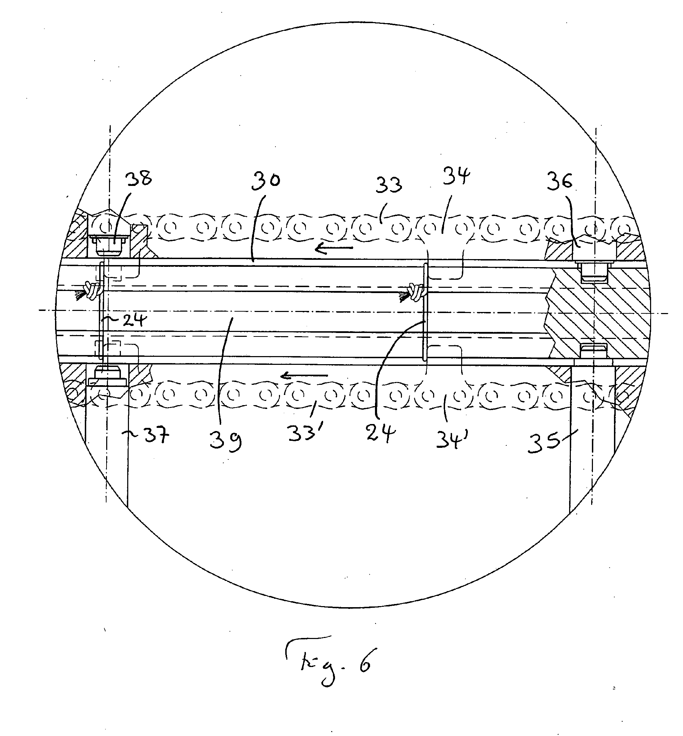

In den Figuren 1 und 5 ist nun der Verlauf des Schwertendteils 10 des Schwertes 30 gut zu erkennen. Die Seitenansicht von Figur 1 zeigt den Schwertendteil 10, wie er von einer seitlichen Lage neben dem Fördermittel, die mit 10' bezeichnet ist, sich gekrümmt zum Halteschlaufenzubringer erstreckt, und sich im gezeigten Beispiel dabei unter die Förderebene 5' erstreckt. Die dargestellte bevorzugte Ausführungsform zeigt ferner, dass sich das Schwertendteil aus seiner seitlichen Lage 10' in Förderrichtung der Verpackungseinheiten über das Fördermittel bzw. den Förderkanal erstreckt und über diesem mit dem weiteren Teil des Schwertes 30 verbunden ist, dies in diesem Beispiel an der Stelle 19'. Die bevorzugte gekrümmte Erstreckung des Schwertendteiles 10 von oberhalb des Fördermittels in die seitliche Lage und weiter zum Halteschlaufenzubringer und z.B. dabei wie in diesem Beispiel gezeigt unter das Fördermittel bzw. unter den Förderkanal, ist insbesondere aus Figur 5 ersichtlich, welche die Schnittdarstellung gemäss der Schnittebene D-D von Figur 1 zeigt. Von der seitlichen Lage 10' erstreckt sich das Schwertendteil 10 nach unten unter das Fördermittel bzw. den Förderkanal und in den Zubringbereich der Schlaufen 24, wo das Schwertendteil in einem freien Ende 19 endet. Die dargestellte Ausführung mit der Erstreckung unter die Förderebene des Fördermittels ist nur als Beispiel zu verstehen; je nach Durchmesser der Wurst kommt der Halteschlaufenzubringer bzw. gemäss der Erfindung dann auch das freie Ende des Schwertendteils 10 unter oder im Wesentlichen in oder über die Förderebene zu liegen, dann natürlich in einer Stellung, die den Durchlauf der Wurst nicht hindert.

In dem bevorzugten Ausführungsbeispiel ist das freie Ende des Schwertendteiles 10 als ein vergrössertes Endstück 19 ausgebildet, insbesondere als ein halbkugelförmiges oder pilzförmiges Endstück 19. Das Schwertendteil könnte sich von der seitlichen Position 10' ohne ein weiteres Ansteigen zum weiteren Abschnitt des Schwertes 30 erstrecken, sodass das Schwertendteil 10 mit seinem Verbindungsbereich zum Schwert 30 und das Schwert 30 selber tiefer liegen würden als in Figur 1 gezeigt und sich im Wesentlichen seitlich neben dem Fördermittel befinden würden. Bevorzugt ist aber die dargestellte Ausführung, bei welcher sich das Schwertendteil in Richtung auf das Schwert hin über das Fördermittel bzw. den von diesem vorzugsweise gebildeten Förderkanal erstreckt, was in Figur 5 mit der Position 10" des Schwertendteils 10 dargestellt ist. Damit liegt auch das Schwert 30 über dem Fördermittel 5 und im Wesentlichen in der Längsachse des Fördermittels bzw. Kanals bzw. in der Förderrichtung. Das Schwertendteil 10 ist dazu bevorzugterweise mit seinem von der Befestigung am Schwert 30 wegführenden Teil mehrfach abgewinkelt ausgeführt oder wie dargestellt gekrümmt ausgeführt, insbesondere wendelähnlich bzw. schraubenlinienähnlich gebogen ausgeführt, sodass sich der in den Figuren gezeigte gekrümmte Verlauf von der seitlichen Position 10' zu der Schlaufenzuführung ergibt und insbesondere der weiter bevorzugte abgewinkelte oder gebogene Verlauf zu der Position 10" oberhalb des Fördermittels. Der Schwertendteil 10, der auch als Dorn oder Spiess bezeichnet werden kann, ist dabei bevorzugt gebogen ausgeführt und glatt, sodass auf ihm die jeweilige Halteschlaufe 24 gut entlanggleiten kann. Dazu ist eine Steigung des wendelförmigen Schwertendteils 10 von 15 Grad bis 35 und insbesondere ca. 30 Grad bevorzugt. Eine geringe Steigung fördert das Gleiten der Halteschlaufen, führt aber zu einer grossen Länge des Wendels und damit der Anordnung. Der bevorzugte Wert ermöglicht ein gutes Gleiten bei kompakter Anordnung. Eine vielfach abgewinkelte Formgebung ist indes auch möglich.

Weiter bevorzugt ist eine konisch nach vorne bzw. zum freien Ende zulaufende Formgebung. Das freie Ende 19 ist derart positioniert, dass es die umgrenzte Fläche der Schlaufen 24 durchsetzt, wenn diese Schlaufen jeweils vom Verschliesswerkzeug vom Schlaufenzubringer 23 entfernt werden. Dies wird nun anhand der Figuren 3-5 näher erläutert. Das freie Ende 19 des Schwertendteils 10 bleibt dabei bevorzugterweise immer frei, d.h. es ist kein Indexstift wie im Stand der Technik vorgesehen. Ein solcher könnte indes vorgesehen sein, käme aber erst dann zum Einsatz, wenn das freie Ende erfindungsgemäss die Schlaufe bereits aufgenommen hat. Der Indexstift hätte dann nur noch den Effekt einer zusätzlichen Sicherung, welche indes beim Vorgehen gemäss der Erfindung eigentlich nicht benötigt wird.

Figur 3 zeigt das Detail A in Figur 1, wobei gleiche Bezugszeichen wiederum gleiche Teile bezeichnen. Ersichtlich ist hier genauer der Schlaufenzubringer 23, welcher einzelne Halteschlaufen 24 in den Bereich des Verschliesswerkzeuges der Verschliessvorrichtung 1 bringt. Die Halteschlaufen 24 können dabei auf einem nicht näher dargestellten Trägerband befestigt sein oder können punktuell aneinander befestigt sein, sodass sie eine trägerbandlose förderbare Einheit bilden; dies ist dem Fachmann bekannt und wird hier nicht näher dargestellt. In Figur 3 sind ferner die Mittel zur Bildung des Zopfes 22 gezeigt, welche bevorzugt und auf bekannte Weise von Scherenpaaren 20 und 21 gebildet werden. Der füllgutfreie Bereich oder Zopf 22 wird in den Figuren zwischen den Verpackungseinheiten 105 und 104 gebildet, wobei die Verpackungseinheit 105 bereits fertig befüllt ist, sodass an ihr der Endclip gesetzt wird und die Verpackungseinheit 104 in Füllung begriffen ist, sodass an ihr der Anfangsclip gesetzt wird. Entsprechend sind in Figur 3 die beiden Clipdrahtstränge 25 für den End- bzw. Anfangsclip jeder Verpackungseinheit und das entsprechende Unterwerkzeug bzw. die Matrize 26 dargestellt. Die Darstellung von Figur 3 zeigt dabei die Stellung des Verschliesswerkzeuges vor dem Verschliessvorgang. Die dargestellten vorgeformten Clipdrähte 25 und deren Verschliesswerkzeuge sind dabei dem Fachmann bekannt und werden hier nicht im Detail erläutert. Ferner ersichtlich ist in Figur 3 der vordere Teil des Schwertendteiles 10 mit dem freien Ende 19, welches auch hier mit einem vergrösserten, insbesondere pilzförmigen Endstück versehen ist. Das freie Ende des Schwertendstückes 10 erstreckt sich dabei wie dargestellt unter das Fördermittel im Wesentlichen bis zu dessen Längsmittelachse, wie aus Figur 5 ersichtlich. Die Schlaufe 24 wird durch das Verschliesswerkzeug 26 auf das freie Ende des Schwertendteiles 10 aufgezogen wird. Dies ist in den Figuren 4 und 5 ersichtlich, wobei Figur 4 in Seitenansicht darstellt, dass das Werkzeug 26 in die Verschlussposition hochgefahren ist, wodurch die Schlaufe 24' vom im Werkzeug befindlichen Clipdraht mitgenommen worden ist, damit sie beim Verschliessen des Clips um den Zopf 22 an diesem befestigt wird. Bei diesem Hochfahren des Verschliesswerkzeuges 26 wird die Halteschlaufe 24' vom freien Ende 19 des Schwertendes 10 erfasst bzw. die Halteschlaufe wird auf das Schwert 10 aufgezogen, wie dies insbesondere in Figur 5 gut ersichtlich ist. In dieser Figur ist das Werkzeug 26 mit dem Clipdraht 25 einerseits in seiner unteren Endstellung mit unterbrochenen Linien dargestellt und mit 26 bezeichnet und in seiner oberen Verschliesstellung mit 26' dargestellt. In dieser Stellung ist der entsprechend verformte bzw. geschlossene Clip mit 25' bezeichnet. In Figur 5 ist dabei auch das Oberwerkzeug bzw. der Stempel 27 einerseits in der Offenstellung des Werkzeuges ersichtlich und mit 27 bezeichnet und in der geschlossenen Verschlussstellung mit 27'. Dabei ist insbesondere in Figur 5 gut ersichtlich, wie die vom Werkzeug 26 mitgenommene und in dem Clip 25' befindliche Halteschlaufe 24 mit ihrer von der Schlaufe umschlossenen Fläche durch die Werkzeugbewegung das freie Ende 19 des Schwertendteiles 10 aufgenommen hat bzw. auf das Schwertendteil 10 aufgezogen worden ist. Bei der Wegbewegung der wurstförmigen Verpackungseinheit durch das Fördermittel 5 wird nun die auf dem Schwertendteil 10 aufgezogene Halteschlaufe entlang diesem bewegt und zum Schwert 30 hingeführt. Durch die bevorzugte Ausgestaltung, bei welcher das Schwertendteil gekrümmt ist, insbesondere wendelähnlich gebogen ist oder bei welchem es mehrfach abgewinkelt ist, ergibt sich ein gutes Gleiten der Halteschlaufe entlang dem Schwertendteil. Die Halteschlaufe wird dabei bis zu einer Position 10' seitlich des Fördermittels geführt und allenfalls auf dieser Höhe auf das Schwert 30 abgegeben oder sie wird, wie dargestellt und bevorzugt, durch das weiter bogenförmig gekrümmte Schwertendteil 10 bis zur Position 10" oberhalb des Fördermittels und oberhalb des eigentlichen Förderkanals für die Verpackungseinheiten geführt.

Die Verpackungseinheiten werden dabei durch das Fördermittel 5 so lange gefördert und vorzugsweise geführt, bis sie von diesem herabfallen oder herabgleiten, wobei dann die Halteschlaufe bereits auf dem Schwert 30 befindlich ist. In der dargestellen Ausführungsform wird die hinterste hängende Verpackungseinheit 107 durch die vorderste geförderte Verpackungseinheit 106 noch weitergestossen und gelangt damit zur Transporteinrichtung des Schwertes. Dies ist aber nur als Variante zu verstehen. Die Transporteinrichtung des Schwertes 30 kann die am Schwert hängenden Einheiten 107 auch näher am Fördermittel 5 erfassen. Die Transporteinrichtung für die am Schwert hängenden Verpackungseinheiten 107-110 ist vorzugsweise ein Kettenförderer mit einem Antrieb 32, welcher ebenfalls mit dem Antrieb der Verschliessvorrichtung und dem Antrieb des Fördermittels synchronisiert ist. Die in der Figur 6 dargestellte Draufsicht auf das Schwert 30 mit den Halteschlaufen 24 zeigt zwei Förderketten 33 und 33', welche in Richtung der Pfeile umlaufen und Förderlaschen 34 und 34' aufweisen, welche in entsprechenden seitlichen Längsnuten des Schwertes 30 in dieses eingreifen und an den Halteschlaufen angreifen und diese mit den daran hängenden Verpackungseinheiten entlang des Schwertes 30 vorschieben. Auf die grundsätzlich aus DE-OS 3437830 bekannte Weise wird das Schwert dabei durch mit diesem in Eingriff und wieder ausser Eingriff bringbare Haltebolzen 36-38 gehalten, sodass die jeweiligen Haltebolzen beim Vorbeitransport einer Halteschlaufe am Schwert ausser Eingriff gebracht werden, wie dies in Figur 6 für das Bolzenpaar 37 und 38 gezeigt ist, während die Bolzen im Eingriff am Schwert sind, wenn keine Halteschlaufe den Eingriffsbereich passiert, wie dies anhand des Bolzenpaares 35 und 36 dargestellt ist. Es sind von der Stückzahl her mehr als die in Figur 6 dargestellten Bolzen vorgesehen, vorzugsweise entlang des Schwertes 30 acht Bolzenpaare, um eine möglichst fixe Halterung des Schwertes 30 zu bewirken, damit dessen freies Ende 19 trotz der "fliegenden" Halterung des Schwertes immer in der vorgesehenen Aufnahmeposition ist.

Gemäss den Figuren 2 und 6 ist weiter ersichtlich, wie mittels umlaufender Haken 41, die an einer beim Kettenrad 43 umgelenkten Kette 42 angeordnet sind, die Schlaufen 24 von dem Schwert übernommen werden können, wozu die Haken 41 in eine oberseitige Längsnut 39 des Schwertes eingreifen und dabei die Halteschlaufen übernehmen können.

## Patentansprüche

1. Anordnung umfassend eine Verschliessvorrichtung (1) zur Bildung von wurstförmigen, beidseits mit Clipsen (25) verschlossenen Verpackungseinheiten (104 - 110), mit einem Halteschlaufenzubringer (23), welcher dem Verschliesswerkzeug (26,26') Halteschlaufen (24,24') zu deren Anbringung an einem Verpackungseinheitsende mittels des dort gesetzten Clips zuführt, sowie umfassend eine Fangvorrichtung (11) mit einem Schwert (10,30), auf dessen der Verschliessvorrichtung zugewandten Schwertendteil (10) die Halteschlaufen zum Aufhängen der Verpackungseinheiten am Schwert aufziehbar sind, und ein angetriebenes Fördermittel (5) für die aus der Verschliessvorrichtung austretenden Verpackungseinheiten, **dadurch gekennzeichnet, dass** das Schwertendteil (10) sich von einer Lage (10') seitlich des Fördermittels zum Halteschlaufenzubringer (23) erstreckt und dort ein freies Ende (19) derart positioniert aufweist, dass eine vom Verschliesswerkzeug mitgenommene Halteschlaufe (24') durch diese Mitnahme über das freie Schwertende (19) aufziehbar und damit auf das Schwertendteil (10) aufnehmbar ist.

2. Anordnung nach Anspruch 1, **dadurch gekennzeichnet, dass** der Schwertendteil (10) sich von der seitlichen Lage (10') gekrümmt oder mehrfach abgewinkelt zum Halteschlaufenzubringer erstreckt.

3. Anordnung nach Anspruch 2, **dadurch gekennzeichnet, dass** der Schwertendteil (10) sich von der seitlichen Lage (10') gekrümmt oder mehrfach abgewinkelt derart erstreckt, dass der Schwertendteil (10) mit seinem schwertseitigen Anschluss (19') in eine Position (10'') oberhalb der geförderten Verpackungseinheiten zu liegen kommt.

4. Anordnung nach einem der Ansprüche 2 oder 3, **dadurch gekennzeichnet, dass** der Schwertendteil wendelförmig gebogen verläuft.

5. Anordnung nach Anspruch 4, **dadurch gekennzeichnet, dass** der Schwertendteil eine Steigung von 15 Grad bis 35 Grad und insbesondere ca. 30 Grad aufweist.

6. Anordnung nach einem der Ansprüche 1 bis 5, **dadurch gekennzeichnet, dass** der Schwertendteil (10) eine konische, zu seinem freien Ende zulaufende Form aufweist.

7. Anordnung nach einem der Ansprüche 1 bis 6, **dadurch gekennzeichnet, dass** das freie Ende (19) des Schwertendteils (10) mit einem Kopf, insbesondere einem halbkugelförmigen oder pilzförmigen Kopf versehen ist.

8. Anordnung nach einem der Ansprüche 1 bis 7, **dadurch gekennzeichnet, dass** das Schwert (10, 30) von mehreren, entlang des Schwertes angeordneten Haltemitteln (35-38), die angetrieben mit dem Schwert in Eingriff und ausser Eingriff bringbar sind, gehalten wird, so dass Halteschlaufen entlang des Schwerts transportierbar sind.

9. Anordnung nach Anspruch 8, **dadurch gekennzeichnet, dass** zum Transport der Halteschlaufen mit den daran befertigten Verpackungseinheiten (107-110) entlang des Schwertes eine Transporteinrichtung (33, 33', 34, 34') vorgesehen ist.

10. Anordnung nach einem der Ansprüche 1 bis 9, **dadurch gekennzeichnet, dass** das Schwert (30) eine oberseitige Längsnut (39) aufweist, welche zum Eingriff von Übernahmehaken (41) einer Übernahmevorrichtung (40) bestimmt sind.

11. Fangvorrichtung (11), welche für eine Anordnung nach einem der Ansprüche 1 bis 10 bestimmt ist, **dadurch gekennzeichnet, dass** diese ein Schwert (10,30) mit einem Schwertendteil (10) aufweist, das derart ausgestaltet ist, dass es sich von einer Lage (10') seitlich des Fördermittels (5) der Anordnung zum Halteschlaufenzubringer der Anordnung erstrecken kann und dort ein freies Ende (19) derart positioniert bilden kann, dass eine vom Verschliesswerkzeug der Verschliessvorrichtung der Anordnung bei der Verschliessbewegung mitgenommene Halteschlaufe durch diese Mitnahme über das freie Schwertende gezogen und damit auf das Schwertendteil aufgenommen wird.

12. Fangvorrichtung nach Anspruch 11, **dadurch gekennzeichnet, dass** der Schwertendteil (10) sich von der seitlichen Lage (10') gekrümmt oder mehrfach abgewinkelt zum Halteschlaufenzubringer erstreckt und insbesondere unter die Förderebene (5') oder über die Förderebene oder im Wesentlichen in die Förderebene zu liegen kommt.

13. Fangvorrichtung nach Anspruch 11 oder 12, **dadurch gekennzeichnet, dass** der Schwertendteil (10) sich von der seitlichen Lage (10') gekrümmt oder mehrfach abgewinkelt bis oberhalb des Fördermittels (5) erstreckt, derart, dass der Schwertendteil (10) mit seinem schwertseitigen Anschluss (19') oberhalb der geförderten Verpackungseinheiten zu liegen kommt.

14. Fangvorrichtung nach einem der Ansprüche 11 bis 13, **dadurch gekennzeichnet, dass** der Schwertendteil wendelförmig gebogen verläuft.

15. Fangvorrichtung nach Anspruch 14, **dadurch gekennzeichnet, dass** der Schwertendteil eine Steigung von 15 Grad bis 35 Grad und insbesondere ca. 30 Grad aufweist.

16. Fangvorrichtung nach einem der Ansprüche 11 bis 15, **dadurch gekennzeichnet, dass** der Schwertendteil (10) eine konische Form aufweist.

17. Fangvorrichtung nach einem der Ansprüche 11 bis 16, **dadurch gekennzeichnet, dass** das freie Ende (19) des Schwertendteils (10) mit einem Kopf, insbesondere einem halbkugelförmigen oder pilzförmigen Kopf versehen ist.

18. Fangvorrichtung nach einem der Ansprüche 11 bis 17, **dadurch gekennzeichnet, dass** das Schwert (10, 30) von mehreren, entlang des Schwertes angeordneten Haltemitteln (35-38), die angetrieben mit dem Schwert in Eingriff und ausser Eingriff bringbar sind, gehalten wird, dass Halteschlaufen entlang des Schwerts transportierbar sind.

19. Fangvorrichtung nach Anspruch 18, **dadurch gekennzeichnet, dass** zum Transport der Halteschlaufen mit den daran befertigten Verpackungseinheiten (107-110) entlang des Schwertes eine Transporteinrichtung (33, 33', 34, 34') vorgesehen ist.

20. Fangvorrichtung nach einem der Ansprüche 11 bis 19, **dadurch gekennzeichnet, dass** das Schwert (30) eine oberseitige Längsnut aufweist, welche zum Eingriff von Übernahmehaken (41) einer Übernahmevorrichtung (40) bestimmt sind.

21. Fangvorrichtung nach einem der Ansprüche 11 bis 20, **dadurch gekennzeichnet, dass** das freie Ende (19)des Schwertendteils (10) immer frei liegt.

22. Verfahren zum Aufbringen von an wurstförmigen Verpackungseinheiten mittels einer Verschliessvorrichtung mit Verschliesswerkzeug und Clipsen befestigten Halteschlaufen auf ein Schwert, **dadurch gekennzeichnet, dass** das freie Ende des Schwertes derart in der Verschliessvorrichtung positioniert wird, dass die vom Verschliesswerkzeug mitgenommenen Halteschlaufen dabei vom Werkzeug direkt über das freie Ende des Schwertes gezogen werden, wobei bevorzugt das freie Ende (19) des Schwertendteils (10) immer frei bleibt.

23. Verfahren nach Anspruch 22, **dadurch gekennzeichnet, dass** der Schwertendteil (10) sich von der seitlichen Lage (10') gekrümmt oder mehrfach abgewinkelt erstreckt, dass sein freies Ende unter die Förderebene (5') oder im Wesentlichen in die Förderebene oder über die Förderebene zu liegen kommt.

24. Verfahren nach Anspruch 23, **dadurch gekennzeichnet, dass** der Schwertendteil (10) sich von der seitlichen Lage (10') gekrümmt oder mehrfach abgewinkelt bis oberhalb des Fördermittels (5) erstreckt, derart, dass der Schwertendteil (10) mit seinem schwertseitigen Anschluss (19') oberhalb der geförderten Verpackungseinheiten zu liegen kommt.

25. Verfahren nach einem der Ansprüche 23 oder 24, **dadurch gekennzeichnet, dass** der Schwertendteil wendelförmig gebogen verläuft.

26. Verfahren nach Anspruch 25, **dadurch gekennzeichnet, dass** der Schwertendteil eine Steigung von 15 Grad bis 35 Grad und insbesondere ca. 30 Grad aufweist.

27. Verfahren nach einem der Ansprüche 22 bis 26, **dadurch gekennzeichnet, dass** der Schwertendteil (10) eine konische Form aufweist.

28. Verfahren nach einem der Ansprüche 22 bis 27, **dadurch gekennzeichnet, dass** das freie Ende des Schwertendteils (10) mit einem Kopf (19), insbesondere einem halbkugelförmigen oder pilzförmigen Kopf versehen ist.

29. Verfahren nach einem der Ansprüche 22 bis 28, **dadurch gekennzeichnet, dass** das Schwert (30) eine oberseitige Längsnut aufweist, welche zum Eingriff von Übernahmehaken (41) einer Übernahmevorrichtung (40) bestimmt sind.
